Europäisches Patentamt

European Patent Office

Office européen des brevets

(19)

(11) Numéro de publication : **0 665 448 A1**

## (12) DEMANDE DE BREVET EUROPEEN

(21) Numéro de dépôt : 95420018.4

(22) Date de dépôt : 26.01.95

(51) Int. Cl.$^6$ : **G02B 5/08**, C22F 1/04, B21B 3/00

(30) Priorité : 01.02.94 FR 9401314

(43) Date de publication de la demande :
02.08.95 Bulletin 95/31

(84) Etats contractants désignés :
**AT DE ES FR GB IT**

(71) Demandeur : **PECHINEY RHENALU**
**2-6, place de l'Iris Tour Manhattan LA**
**DEFENSE 2**
**F-92400 COURBEVOIE (FR)**

(72) Inventeur : **Hoffman, Jean-Luc**
**6, avenue Marius Chorot**
**F-38430 Moirans (FR)**
Inventeur : **Fehrenbach, François**
**50, avenue maréchal Leclerc, 4 Cité Capayrou**
**F-82100 Castelsarrasin (FR)**
Inventeur : **Raynaud, Guy-Michel**
**Les Tradets**
**F-63500 Issoire (FR)**

(74) Mandataire : **Mougeot, Jean-Claude**
**PECHINEY**
**28, rue de Bonnel**
**F-69433 Lyon Cedex 03 (FR)**

(54) **Bandes ou toles d'aluminium à propriétés optiques réproductibles et améliorées.**

(57)    L'invention concerne des tôles ou bandes en aluminium destinées au brillantage/anodisation possédant une hauteur d'abrasion (H5/95) inférieure à 500 nm et de préférence 100 nm, un pas moyen de microrugosité inférieur à 1 μm, un taux de cornes compris entre -10 et 4% et un rapport d'élancement des grains compris entre 3 et 20.

FIG.3

EP 0 665 448 A1

L'invention concerne des tôles ou bandes d'Al à propriétés optiques améliorées.

Les tôles ou bandes destinées aux réflecteurs doivent présenter une haute réflectivité, une faible diffusivité et une bonne aptitude aux opérations de brillantage et d'anodisation finales, en un temps faible compatible avec les vitesses industrielles élevées de défilement des bandes.

Jusqu'ici, le seul paramètre pris en compte pour obtenir ces propriétés était la rugosité superficielle Ra, qui devrait être inférieure à une certaine valeur limite (voir par exemple la demande EP-A-0495755).

Or, il s'est avéré que cette caractéristique seule est insuffisante pour obtenir de façon reproductible les qualités optiques requises telles que:

- une réflectivité élevée, par exemple supérieure à 70% à l'état brut de laminage à froid et supérieure à 80% à l'état brillanté, dans la direction spéculaire
- une diffusivité (ou voile) faible inférieure à 15% à l'état brut et inférieure à 5% à l'état brillanté, hors de la direction spéculaire, en lumière blanche, ces valeurs étant mesurées selon les normes ISO 7668 et 7669.

La demanderesse a trouvé que pour obtenir de façon reproductible des propriétés optiques élevées, on doit prendre en compte non seulement les caractéristiques géométriques de la surface mais aussi la structure métallurgique de la tôle ou de la bande.

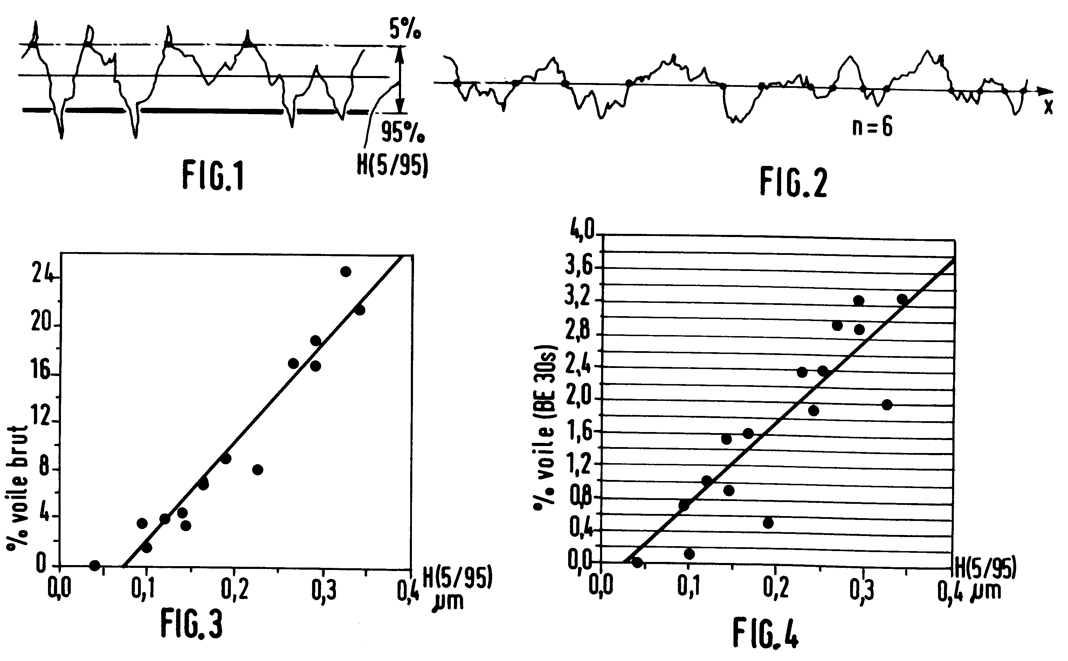

Il a été trouvé qu'un paramètre dénommé profondeur d'abrasion H(5/95) déterminé sur métal brut est directement corrélé à l'indice de voile mesuré soit sur métal brut de laminage à froid soit après un brillantage électrochimique de 30 sec. La profondeur d'abrasion H (5/95) est la distance entre 2 lignes "parallèles" à la ligne moyenne du profil ayant un taux de portance de 5% et 95%. (voir fig. 1). Les figures 3 et 4 montrent qu'il existe une très bonne corrélation entre le paramètre ci-dessus et la présence de voile, tant à l'état brut (figure 3) qu'après brillantage - (fig. 4). Ce paramètre H (5/95) est déterminé à l'aide d'un (ou plusieurs) profil(s) de microrugosité obtenu(s) de façon classique par une méthode optique, la topographie de la surface étant représentée avec une résolution de l'ordre de quelques dizaines de nanomètres,

Un autre paramètre important est le pas moyen P ou la période moyenne de la microrugosité de surface, mesurée par voie optique, qui doit être aussi faible que possible; il doit être inférieur à 1 $\mu$m, et de préférence inférieur à 0,5 $\mu$m. La figure 2 donne une méthode de détermination de P.

Un autre paramètre influant sur la réflectivité de tôles, telles quelles ou embouties (avant ou après brillantage), est lié à la texture métallurgique de la tôle ou de la bande; cette dernière peut être quantifiée par le taux de cornes tc et le rapport d'élancement A des grains.

Le taux des cornes tc est déterminé suivant la procédure décrite dans la norme NF A 50301 de Juin 1976. Il est défini comme

$$tc = \frac{H\,maxi - H\,mini}{H\,moyen} \times 100$$

de l'embouti, avec, conventionnellement, le signe + si les cornes sont à 0-90° de la direction de laminage et le signe - si les cornes sont à ± 45° de la direction de laminage.

Ce taux de cornes doit être compris entre - 10 et 4%; Il est de préférence compris entre -8 et 2%. Si tc < -10%, la formation de cornes est importante; si tc > 4%, la réflectivité est diminuée.

Le rapport d'élancement des grains A est égal au quotient de leur longueur moyenne à leur largeur moyenne pour les grains superficiels. Par longueur d'un grain on entend sa plus grande dimension dans la direction de laminage, et par largeur, sa plus grande dimension dans la direction perpendiculaire à la direction de laminage. Ces deux mesures sont effectuées dans le plan de la tôle, en surface de l'échantillon. Les grains sont mis en évidence par exemple par oxydation anodique. Il a été constaté que A doit être compris entre 3 et 20, et de préférence entre 10 et 18; si A < 3, la réflectivité est diminuée; si A > 20 le taux de cornes devient trop élevé.

Pour obtenir les meilleurs résultats, on doit avoir la relation

- 8 $\leqq$ tc $\leqq$ 7 - 4 Ln A

Si tc > 7 - 4 Ln A, la réflectivité diminue, si tc < -8, les cornes sont trop importantes.

Les bandes ou tôles selon l'invention sont obtenues par laminage à chaud suivi d'une ou plusieurs passes de laminage à froid, éventuellement séparées d'un recuit et/ou d'un décapage et dont au moins la dernière passe est faite avec des cylindres rectifiés polis.

La figure 1 représente un profil de microrugosité et la définition de H(5/95). La ligne moyenne divise le profil en aires égales de part et d'autre de celle-ci.

La figure 2 représente la définition du pas P, égal à la division de la longueur réelle, compte tenu de l'échelle dans la direction x, d'un segment comportant 2n+l points d'intersection successifs entre le profil et la ligne moyenne par n, pour n assez grand (par exemple > 4)..

La figure 3 donne la corrélation entre H(5/95) et le taux de voile d'un métal brut.

La figure 4 donne la corrélation entre H(5/95) et le taux de voile d'un métal brillanté.

L'invention sera mieux comprise à l'aide des exemples suivants :

**EXEMPLES**

**EXEMPLE 1**

Des tôles en alliage 1092 selon la nomenclature d'Aluminum Association ont été laminées à chaud jusqu'à 6 mm, puis à froid dans les conditions suivantes :

Tôle 1

laminage de 6 à 3 mm, recuit à 250°C (montée à 20°C/h, maintien 3 h)
laminage de 3 à 2 mm, recuit à l'air à 400°C montée à 10°C/h, maintien 2 h), décapage
laminage à froid de 2 à 0,4 mm

Tôle 2

laminage de 6 à 2 mm, recuit à l'air à 350°C, introduction four chaud, maintien 3 h
laminage à froid de 3 à 2 mm, recuit à l'air à 400°C, introduction four chaud, maintien 2 h
laminage à foid de 2 à 0,4 mm

Tôle 3

laminage à froid de 6 à 2 mm, recuit à 350°C, introduction four chaud, maintien 3 h
laminage à froid de 3 à 2 mm, recuit à 400°C, introduction four chaud, maintien 2 h
laminage à froid de 2 à 0,4 mm
La réduction de 2 à 0,4 mm a été effectuée en plusieurs passes dont au moins la dernière avec des cylindres rectifiés polis.
On a obtenu les résultats suivants sur métal brut :

| Tôle N° | Tc % | A | Réflectance % | Voile % | 7-4LnA |
|---------|------|-----|---------------|---------|--------|
| 1 | 1,5 | 5 | 78 | 8 | -0,6 |
| 2 | -2,5 | 5 | 86 | 5 | -0,6 |
| 3 | -5 | 13 | 92 | 3 | -3,3 |

**EXEMPLE 2**

Sur des tôles en 1092, de même structure métallurgique ( taux de cornes = - 3% et rapport d'élancement des grains A = 7), ayant des états de surface différents (par exemple contrôlés par polissage, mise sous presse ou laminage avec des cylindres polis plus ou moins finement..) on a obtenu les résultats suivants sur métal brut.

Tôle 4:

H(5/95) = 50 nm, P = 300 nm, réflectivité : 86%

Tôle 5:

H(5/95) = 200 nm, P = 300 nm, réflectivité : 71%

Tôle 6:

H(5/95) = 50 nm, P = 500 nm, réflectivité : 80%

## Revendications

1. Bandes ou tôles en aluminium destinées au brillantage/anodisation, caractérisées en ce que la hauteur d'abrasion H(5/95) est inférieure à 500 nm et de préférence inférieure à 100 nm.

2. Bandes ou tôles selon la revendication 1 caractérisées en ce que le pas moyen de la rugosité P est inférieur à 1 $\mu$m et préférentiellement inférieur à 0,5 $\mu$m.

3. Bandes ou tôles selon l'une des revendications 1 ou 2 caractérisées en ce que le rapport d'élancement des grains A est supérieur à 3 et préférentiellement supérieur à 10.

4. Bandes ou tôles selon la revendication 3 et destinées à l'emboutissage caractérisées en ce que le rapport d'élancement des grains A est compris entre 3 et 20 et préférentiellement entre 10 et 18.

5. Bandes ou tôles selon une des revendications 1 à 4 et destinées à l'emboutissage caractérisées en ce que le taux de cornes tc est compris entre -10 et 4%.

6. Bandes ou tôles selon la revendication 5 et destinées à l'emboutissage caractérisées en ce que le taux de cornes tc est compris entre -8 et 2%.

7. Bandes ou tôles selon une des revendications 1 à 4 caractérisées en ce que le taux de cornes tc et l'élancement A vérifient les relations

$$tc \text{ (en \%)} < 7 - 4 LnA$$

8. Bandes ou tôles selon la revendication 7 et destinées à l'emboutissage caractérisées en ce que $-8 < tc < 7 - 4 LnA$.

9. Bandes ou tôles selon l'une des revendications 1 à 8, caractérisées en ce qu'elles sont obtenues par laminage à chaud suivi d'une ou plusieurs passes de laminage à froid, éventuellement séparées d'un recuit et/ou d'un décapage et dont au moins la dernière passe est effectuée à l'aide de cylindres rectifiés polis.

FIG.1

FIG.2

FIG.3

FIG.4

EP 0 665 448 A1

**Office européen des brevets**

# RAPPORT DE RECHERCHE EUROPEENNE

Numero de la demande

EP 95 42 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 011 no. 222 (C-435) ,18 Juillet 1987 & JP-A-62 037393 (MITSUBISHI ELECTRIC CORP) 18 Février 1987, * abrégé * | 1 | G02B5/08 C22F1/04 B21B3/00 |
| D,A | EP-A-0 495 755 (ALUSUISSE-LONZA SERVICES AG) * revendication 1 * | 1 | |
| A | DATABASE WPI Section Ch, Week 1686 Derwent Publications Ltd., London, GB; Class M21, AN 86-102870 & JP-A-61 046 303 (KOBE STEEL KK) , 6 Mars 1986 * abrégé * | 1 | |
| A | DATABASE WPI Section Ch, Week 1686 Derwent Publications Ltd., London, GB; Class M21, AN 86-102869 & JP-A-61 046 302 (KOBE STEEL KK) , 6 Mars 1986 * abrégé * | 1 | **DOMAINES TECHNIQUES RECHERCHES (Int.Cl.6)** G02B C22F B21B |
| A | PATENT ABSTRACTS OF JAPAN vol. 017 no. 176 (C-1045) ,6 Avril 1993 & JP-A-04 333597 (NIPPON STEEL CORP) 20 Novembre 1992, * abrégé * | 1 | |
| A | US-A-3 312 535 (W.A.ANDERSON ET AL) | | |
| A | EP-A-0 289 775 (VAW VER ALUMINIUM WERKE AG) | | |
| | -/-- | | |

Le présent rapport a été établi pour toutes les revendications

| Lieu de la recherche | Date d'achèvement de la recherche | Examinateur |
|---|---|---|
| LA HAYE | 19 Mai 1995 | Gregg, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

6

EP 0 665 448 A1

Office européen
des brevets

**RAPPORT DE RECHERCHE EUROPEENNE**

Numero de la demande

EP 95 42 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | MICROSTRUCTURAL SCIENCE, vol. 16, pages 447-463, R.E.HUGHES ET AL 'CHARACTERISATION OF ROLLED ALUMINIUM SURFACES' ----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 19 Mai 1995 | Gregg, N |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................
& : membre de la même famille, document correspondant

EPO FORM 1503 03.82 (P04C02)

7